# EUROPEAN PATENT SPECIFICATION

(11) **EP 2 124 446 B1**
(45) Date of publication and mention of the grant of the patent: **05.08.2020**
(21) Application number: 08156423.9
(22) Date of filing: 19.05.2008
(51) Int. Cl.: H04N 21/462, H04N 21/43, H04N 21/4402, H04N 21/41

(54) **A control device and a method for adjusting the frame rate of a video image sequence**
Kontrollvorrichtung und Verfahren zur Einstellung der Bildrate einer Videobildsequenz
Dispositif de contrôle et procédé de réglage de la fréquence d'image d'une séquence d'image vidéo

(43) Date of publication of application: 25.11.2009
(73) Proprietor: SAAB AB, 581 88 Linköping (SE)
(72) Inventor: Gustavsson, Erik, 582 12 Linköping (SE); Ekström, Johan, 582 14 Linköping (SE)
(74) Representative: Zacco Sweden AB

(56) References cited:
- EP-A- 1 482 732
- WO-A-00/48343
- WO-A-2006/058213
- WO-A-2007/129257
- GB-A- 2 305 801
- JP-A- 2006 311 587
- JP-A- 2007 267 039
- US-B1- 6 542 198
- US-B1- 6 754 234

## Description

### Technical field

The present invention relates in general to a digital video system and, in particular, to a control device and a method for adjusting the frame rate of video image sequence transmitted over a transmission channel in a real-time digital video system.

### Background of the invention

Various types of display systems are present in the prior art, e.g. GB-A-2 305 801 shows an image decoding apparatus, EP-A-1 482 732 shows a video display system, WO 2007/129257 A shows an imaging processing apparatus, US-B1-6 754 234 shows an apparatus for asynchronous frame synchronisation and JP 2007 267039 A shows an image transmission system.

As video image sequences are transmitted over certain types of transmission channels, such as a packet based network (e.g. an Ethernet), varying random delays may be introduced in the transmission through the channel. These varying, random delays may occur because of, for example, other transmissions that are also being transmitted between various other devices over the same transmission channel. Varying, random delays make it very difficult to immediately recreate the display synchronisation signals of the video image sequences from the received video image sequence data at the receiver end, since the images of the video sequence are received asynchronously.

Another problem which makes it very difficult to immediately recreate the display synchronisation signals of the video image sequence, is that the display synchronisation signals of the video image sequence are created independently of the video signal output of the display at the receiver end. An example of this is the case where a camera is connected to and being arranged to transfer a video image sequence over a packet-based network, e.g. an Ethernet connection, to a display at remote location. While the camera, for example, may be arranged to create video images sequences of 30 images per second, the display at the receiver end may be arranged to display video image sequences of, for example, 50 images per second.

These problems are commonly solved in the prior art by, for example, having the display at the receiver end redraw the current image and wait until an entire, complete image has been received before displaying this newly received image. This image is then displayed by the display, until the next image has been completely received, and so on.

However, this solution presents a number of problems.

Different images of the video image sequence will be displayed for different periods of time. Since the frame rate of the display (i.e. the number of image updates per second of the display) are not an exact multiple of the received frame rate (i.e. the number of images per second of the received video image sequence), and/or the delays in the transmission are to long, the display may not have received the next image as it has finished drawing a first image and is ready to start drawing the next image. Thus, the display will redraw the first image until the next image has been completely received. This problem is often perceived by the viewer as jerkiness or irregularities in the viewed video image sequence, and is also particularly noticeable during slow panoramic video sequence scans.

It is also desirable in a real-time digital video image system to minimize the delays in the displayed video image sequence. However, the solution presented above introduces a delay which, for example, can last several display updates compared to the shortest possible delay.

### Object of the invention

It is an object of the present invention to achieve a real-time digital video system with reduced image display delay.

### Summary of the invention

The object of the present invention is achieved by a control device for adjusting the video sequence image frame rate of a display, wherein the video sequence images are transmitted over a transmission channel in a real-time video system. The control device is arranged to display a first video sequence image and receive a second video sequence image. The control device is characterized in that it is further arranged to determine a phase difference between the display of the first video sequence image and the reception of the second video sequence image, and adjust the video sequence image frame rate of the display by controlling the display of the second video sequence image based on the phase difference.

An advantage of the above described invention is that it enables a steady and robust viewing of a video image sequence, and improves the display quality of the video image sequence.

Another advantage of the above described invention is that it substantially reduces image display delays in the real-time video system, wherein the delay may be caused by, for example, transmissions over a packet-based transmission network.

A further advantage of the above described invention is that it reduces irregularities or jerkiness in the video image sequence and thereby improves the video image quality of the displayed video image sequence.

A further advantage of the above described invention is that it avoids mismatch between video sequence image updates in the display and the image rate of the video image sequence.

Preferably the control device is arranged to control the display of the second video sequence image based on the phase difference such that the second video sequence image is displayed when the display of the first video image sequence is completed, and such that the video sequence image frame rate of the display is an exact multiple of the number of video sequence images per second in the video sequence. This feature enables the present invention to achieve the shortest possible image display delays in the real-time video system.

Preferably the control device is arranged to regulate the display of the second video sequence image by: adjusting the pixel clock frequency of the display, the length of the vertical synchronisation information in the second video sequence image, and/or the length of the horizontal synchronisation information in the second video sequence image. This feature enables the present invention to be suitably arranged to work with any type of display independent of type or brand. It also enables the control device to be suitable arranged so as to take the sensitivity of the display to variations or changes in these parameters in to account when adjusting the video sequence image frame rate.

The object of the present invention is also achieved by a method for adjusting the video sequence image frame rate of a display, wherein the video sequence images are transmitted over a transmission channel in a real-time video system. The method comprises the steps of displaying a first video sequence image, and receiving a second video sequence image. The method is characterized in comprising the steps of determining a phase difference between the display of the first video sequence image and the reception of the second video sequence image, and adjusting the video sequence image frame rate of the display by controlling the display of the second video sequence image based on the phase difference.

The object of the present invention is further achieved by a computer program product in a control device as described above, wherein the control device comprises computer readable code means, which when run in the control device performs the steps according to the method described above.

The object of the present invention is further achieved by a real-time video system, which transmits video sequence images over a transmission channel, comprising a control device as described above.

The object of the present invention is further achieved by a display for use in a real-time video system, wherein said real-time video system transmits video sequence images over a transmission channel, comprising a control device as described above.

Further advantageous embodiments of the control device, the method, and the computer program product are set forth in the dependent claims, which correspondently describe further advantageous embodiments of the present invention.

### Brief description of the drawings

The present invention will be described in more detail in the following, with reference to the appended drawings, in which:
Fig. 1 is a block diagram schematically illustrating an overview of a real-time digital video system transmitting video sequences over a transmission channel from a video camera to a display unit.
Fig. 2 illustrates an example of a video sequence image frame of a video sequence image to be displayed on a screen by a display.
Fig. 3 is a block diagram illustrating a control system according to an embodiment of the present invention.
Fig. 4 is a block diagram illustrating a control system according to another embodiment of the present invention.
Fig. 5 is a flowchart illustrating an embodiment of the method according to the present invention.
Fig. 6 is a flowchart illustrating another embodiment of the method according to the present invention.

### Description of the preferred embodiments

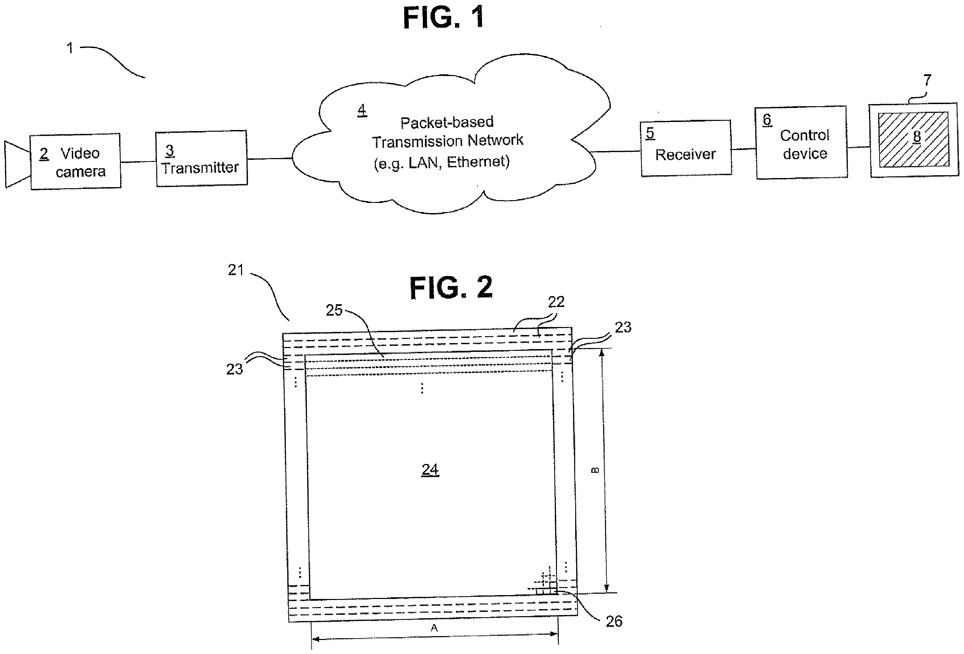

Fig. 1 illustrates an overview of a real-time digital video system 1 transmitting video sequences over a transmission network from a video camera to a display unit. In the following the transmission channel is described as a transmission network, but it should be noted that the present invention is applicable for any type of transmission channel. The transmission network will be referred as a packet-based transmission network, although any type of transmission network for transferring video image sequences may be used in accordance with the present invention.

A video camera 2 is arranged to record video image sequences at a certain frame rate. The video camera 2 may be arranged to transfer the recorded video image sequences to a transmitter 3 capable of transmitting real-time video image sequences. The real-time video image transmitter 3 may also be incorporated in and form part of the video camera 2. The real-time video image transmitter 3 may be arranged to transmit the recorded video image sequences through a packet-based transmission network 4. The packet-based transmission network 4 may be any packet-based network suitable for carrying real-time data traffic, for example, an Ethernet or another type of Local Area Network (LAN). The real-time video image transmitter 3 may be arranged to send the recorded video image sequences over the packet-based transmission network 4 to one or more receivers 5 capable of receiving real-time video image sequences.

According to the present invention, the one or more real-time video image receivers 5 may be arranged to send the received real-time video image sequences to one or more control devices 6. The control devices 6 may be comprised of any analog or digital components or circuits suitable for performing the inventive phase adjusting operation according to the present invention as described hereinafter.

The one or more control devices 6 may be arranged to transfer phase adjusted video image sequences to one or more displays 7. It should also be understood that the one or more real-time video image receivers 5 and/or the one or more control devices 6 may be incorporated in and form part of the one or more displays 7. Furthermore, the one or more real-time video image receivers 5 and/or the one or more control devices 6 may also be arranged together in a separate unit. The one or more control devices 6 may also be suitably adapted for any type, brand, or form of digital displays 7.

Fig. 2 illustrates an example of how video sequence image information in a video sequence image signal may be configured and arranged in order for the video sequence image frame 21 to be correctly viewed on a display 7. In Fig. 2, the video sequence image width is A and the video sequence image height is B. The video sequence image frame 21 may comprise vertical synchronisation information 22, horizontal synchronisation information 23 and the actual video sequence image 24 to be displayed. The display 7 will receive a video sequence image signal and start to output the video sequence image 24 onto the screen 8 of the display row by row from top to bottom by using the vertical 22 and horizontal 23 synchronisation information and its current frame rate.

The vertical synchronisation information 22, which also may be referred to as a VSYNC signal, may be located between a first video sequence image 24 and the next first video sequence image 24. The vertical synchronisation information 22 informs the display 7 of when all of the pixel rows 25 of a video sequence image 24 have been displayed, i.e. the display 7 has reached the end of the video sequence image 24. The horizontal synchronisation information 23, which also may be referred to as a HSYNC signal, may be located in the beginning and/or end of each pixel row 25 of the video sequence image 24. The horizontal synchronisation information 23 informs the display 7 of when a pixel row 25 of a video sequence image 24 ends. The vertical and horizontal synchronisation information 22, 23 may also be referred to as vertical and horizontal blanking intervals, and are not displayed by the display 7 as it draws and displays the video sequence images 24. The vertical and horizontal synchronisation information 22, 23 may be in the form of blank pixels.

In accordance with the present invention, the vertical and horizontal synchronisation information 22, 23 may be used to by the control device 6 to control the frame rate, also referred to as refresh rate, of the video sequence image 24 by the display 7, that is, at which rate a video sequence image 24 are drawn or outputted by the display 7 on the screen 8. This may be performed by adjusting the length of the vertical and/or horizontal synchronisation information 22, 23. The frame rate of the video sequence images 24 may furthermore also be controlled by the control device 6 by adjusting the pixel clock frequency, that is, how fast the pixels of the video sequence image frame 21 are drawn and/or outputted by the display 7.

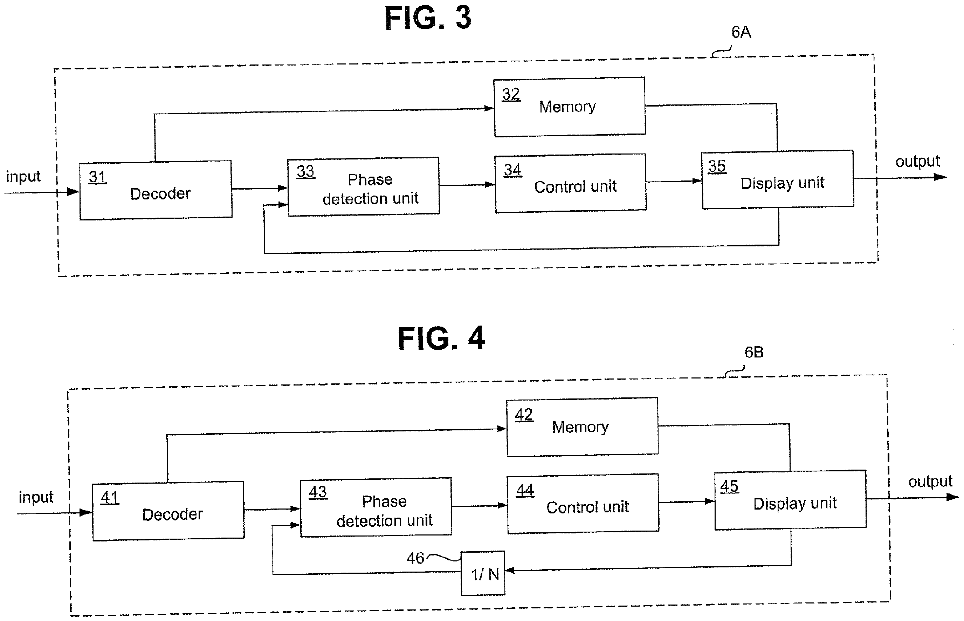

In order to enable a steady and robust viewing of transmitted video image sequences on the screen 8 of the display 7 and achieve the shortest possible delay, the images of a video sequence should arrive at the display 7 at the rate of which the display 7 displays the images, i.e. the frame rate of the display 7. The phase of the display of the video sequence images 24 should also be arranged so that the last part of a video sequence image 24 is received and decoded just before this part of the video sequence image 24 is sent to be displayed by the display 7. Furthermore, in order to enable a steady and robust viewing, the frame rate of the display 7 should be an exact multiple of the number of video sequence images per second in the video sequence. This ensures that each of the video sequence images 24 will be displayed for equal periods of time. These objectives are achieved by the control system, or control loop, according to the present invention presented in Fig. 3 and 4.

Fig. 3 shows an embodiment of the control device 6 in Fig. 1. The phase locked loop (PLL) of the control device 6A in Fig. 3 may include a decoder 31, an image memory 32, a phase detection unit 33, a control unit 34 and a display unit 35.

The decoder 31 may be arranged to receive and decode a video image sequence. The decoder 31 may be arranged to send the decoded video sequence images to an image memory 32. As the decoder 31 has received and decoded a complete video sequence image frame 21 of a video image sequence, the decoder 31 may be arranged to send information, indicating that the complete video sequence image frame 21 has been received to the phase detection unit 33.

The image memory 32 may be arranged to receive and store decoded video sequence images of video image sequences. The image memory 32 may also be arranged to directly forward the decoded video sequence images of video image sequences to the display unit 35.

The display unit 35 may be arranged to retrieve or receive video image sequences from the image memory 32. The display unit 35 may also be arranged to output video image sequences to a display 7. The display unit 35 may further be arranged to adjust the frame rate of the display 7, e.g. by controlling the pixel clock frequency of the display 7 and/or by controlling the length or duration of the vertical 22 and/or horizontal 23 synchronisation of the received video sequence image 24, in response to information received from the control unit 34. Furthermore, the display unit 35 may be arranged to send information to the phase detection unit 33 indicating that a video sequence image frame 21 has been outputted by the display 7. This information may, for example, comprise information indicating that a predetermined position 26 in a video sequence image frame 21 (e.g. the end of the last pixel row 26 of the video sequence image 24 or any other predetermined position in the video sequence image 21) has been outputted by the display 7.

The phase detection unit 33 may be arranged to receive information from the decoder 31, as described above, indicating that a video sequence image frame 21 has been received. It may also be arranged to receive information from the display unit 35, as described above, indicating that a video sequence image frame 21 has been outputted by the display 7. By comparing the information from the decoder 31 and the information from the display unit 35, the phase detection unit 33 can determine a phase difference between the display of the current video sequence image by the display 7, and the reception of the next video sequence image by the decoder 31. The phase detection unit 33 may determine the phase difference as the difference in time between the display of said first video sequence image at a predetermined position, for example, a pixel position or an analog position in the displayed video sequence image, and the completed reception of said second video sequence image. The phase detection unit 33 may then be arranged to send the determined phase difference to the control unit 34.

The control unit 34 may be arranged to receive the determined phase difference from the phase detection unit 33, as described above. Based on the determined phase difference, the control unit 34 may be arranged to control of the frame rate of the display 7 by sending control information to the display unit 35. The control information that the control unit 34 sends to the display unit 35 may comprise information about how much the display unit 35 should adjust the pixel clock frequency of the display 7 and/or how much to adjust the length of the vertical 22 and/or horizontal 23 synchronisation of the received video sequence image 24, in order to compensate for the determined phase difference. For example, a PID-controller may be used in the control unit 34 to perform control of the frame rate of the display 7 in such a manner so as to minimize the error in phase according to the determined phase difference, and thus achieve a shortest possible delay. The specific control information outputted by the control unit 34 in an application may vary depending on, for example, which type of control is best suited for the receiver end and/or how sensitive the display 7 is to variations of any of the variables mentioned above.

The determined phase difference may be used and controlled by the control unit 34 so that the video sequence image frame 21 is received by the decoder 31 just before it is to be displayed by the display 7, i.e. minimize the error in phase according to the determined phase difference. Furthermore, the determined phase difference may also be controlled so that the frame rate of the display 7 is an exact multiple of the received video sequence frame rate, that is, the number of video sequence images per second of the received video image sequence.

Fig. 4 shows another embodiment of the control device 6 in Fig. 1. The phase locked loop (PLL) of the control device 6B in Fig. 4 is essentially identical to the control device 6A in Fig. 3, except from that the control device 6B in Fig. 4 includes a scaling unit 46.

The scaling unit 46 may be located between the display unit 45 and the phase detection unit 43. The scaling unit 46 may be arranged to receive information indicating that a predetermined position 26 in the video sequence image 24 has been displayed by the display 7 from the display unit 45. Depending on the difference in the frame rate of the camera 2 and the current frame rate of the display 7, the scaling unit 46 may rescale the information from the display unit 45 so as to be comparable to the information received in the phase detection unit 43 from the decoder 41. A scaling factor N is an integer that indicates how many times a received video sequence image 24 is drawn or outputted by the display 7. For example, if N = 1 is selected, then the received video sequence image 24 will be outputted at the same frame rate as the received frame rate; if N = 2 is selected, then the received video sequence image 24 will be outputted at a frame rate that is twice the received frame rate; if N = 3 is selected, then the received video sequence image 24 will be outputted at a frame rate that is three times the received frame rate, etc. The scaling factor N may be predetermined so as to correspond to the relation between the frame rate of the camera 2 and the frame rate of the display 7. For example, if the frame rate of the camera 2 is 30 frames per second and the frame rate of the display is 60 Hz, that is, 60 frames per second, the scaling factor N may be set to 2. This ensures that the frame rate of the display 7 is an exact multiple of the number of video sequence images per second of the received video image sequence, even when the frame rate of the display 7 and the frame rate of the camera 2 differs.

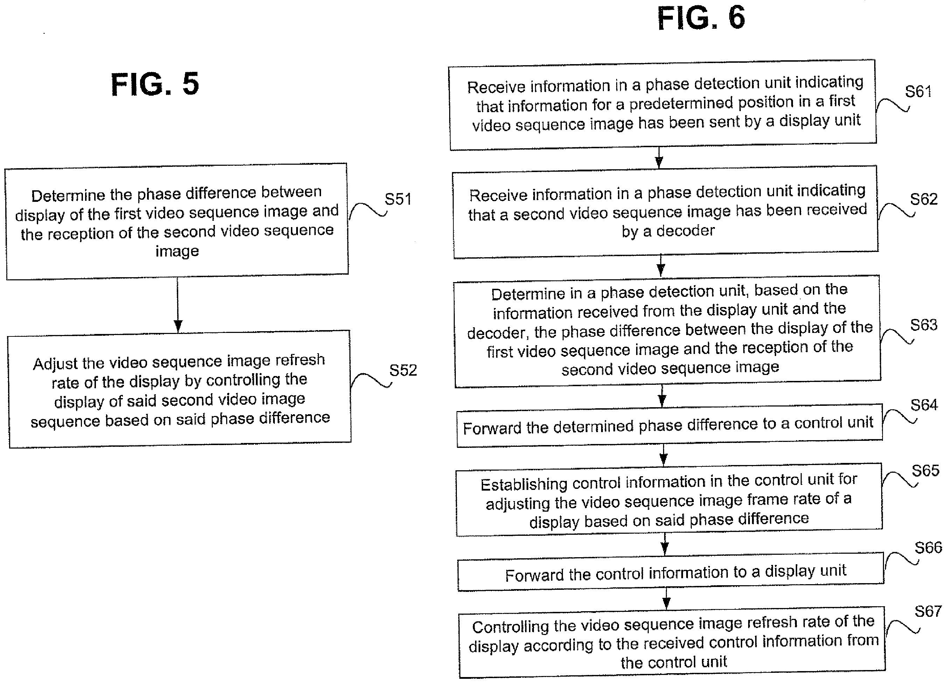

Fig. 5 is a flowchart illustrating an embodiment of the method according to the present invention. In step S51, the phase difference between display of the first video sequence image and the reception of the second video sequence image is determined. This may be referred to as the video sequence image phase difference, or plainly the phase difference.

In step S52, the determined phase difference may be used by, for example, a control unit 34, 44 in the control device 6, 6A, 6B, in order to adjust the frame rate of the display 7. For example, the control device 6, 6A, 6B, may control the adjustment of the frame rate of the display 7 by controlling, or regulating, the display of said second video image sequence based on the phase difference. The control based on the phase difference may be performed by adjusting the pixel clock frequency, the length of the vertical synchronisation information 22 and/or the length of the horizontal synchronisation information 23, which are currently being used by the display 7. The control unit 34, 44 may be adapted to any display regardless of type or brand in order to ensure a stable and robust viewing on the screen 8 of the display 7.

Fig. 6 is a flowchart illustrating another embodiment of the method according to the present invention. In step S61, information is received in the phase detection unit 33, 43 from the display unit 35, 45 indicating that information for a pixel or analog image position, of a predetermined position in a first video sequence image, has been sent to the display 7 by the display unit 35, 45. In step S62, information is received in the phase detection unit 33, 43 from the decoder 31, 41 indicating that pixel information for a pixel, in the same predetermined position in a second video sequence image, has been received by the decoder 31, 41.

In step S63, the phase detection unit 33, 43 may, based on the information received from the display unit 33, 43 and the decoder 31, 41, determine the phase difference between display of the first video sequence image and the reception of the second video sequence image. For example, the time difference between the moment of sending the information for a pixel or analog image position in the predetermined position in the first video sequence image to the display 7 by the display unit 35, 45, and the moment of completing the reception of the second video sequence image by the decoder 31, 41.

In step S64, the phase detection unit 33, 43 may forward the determined phase difference to a control unit 34, 44. In step S65, the control unit 34, 44 may establish control information for adjusting the video sequence image frame rate of the display 7 based on the determined phase difference. The control information established may be arranged to indicate to a display unit 35, 45 how to adjust the pixel clock frequency, the length of the vertical synchronisation information 22 and/or the length of the horizontal synchronisation information 23, which is currently being used by the display 7 in order to ensure a stable and robust viewing on said display 7, as previously described. The control unit 34, 44 may be adapted to any display regardless of type or brand. In step S65, the control unit 34, 44 forwards the control information to a display unit 35, 45.

In step S66, the display unit 35, 45 may control the frame rate of the display 7 in accordance with the received control information from the control unit 34, 44.

In both of the embodiments of the method according to the present invention, as shown in Fig. 5 and 6, a scaling may also be performed of the information received in the phase detection unit 33, 43 from the display unit 35, 45 indicating that pixel information for a pixel, in a predetermined position in a first video sequence image, has been sent to the display 7 by the display unit 35, 45. This may be performed in order to ensure that the frame rate of the display 7 is an exact multiple of the received frame rate, that is, the number of video sequence images per second of the received video image sequence, even when the frame rate of the display 7 and the frame rate of the camera 2 differs.

It should be noted that the control device 6, 6A, 6B according to any of the embodiments described above, is especially well suited to handle delays, where the time difference of a first and a second delay detected by the phase detection unit 33, 43 is below 1 ms.

The present invention may be used for both digital and analogue displays. Analogue video sequence images do not comprise pixels as in digital video sequence images. Instead analogue video sequence images are made up of lines. These can be handled by a digital system as a row of pixels when digitized. Thus an analogue position in a video sequence image may, for example, be a specific line or position in a line.

The description above is of the best mode presently contemplated for practising the present invention. The description is not intended to be taken in a limiting sense, but is made merely for the purpose of describing the general principles of the invention. The scope of the present invention should only be ascertained with reference to the issued claims.

## Claims

1. A control device (6, 6A, 6B) for adjusting the video sequence image frame rate of a display (7), wherein said video sequence images are transmitted over a transmission channel (4) in a real-time video system (1), said control device (6, 6A, 6B) being arranged to
display a first video sequence image on a display (7);
receive a second video sequence image;
**characterized in that**
said control device (6, 6A, 6B) is further arranged to
determine a phase difference between the display of the first video sequence image and the reception of the second video sequence image; and
adjust the video sequence image frame rate of the display (7) by displaying said second video sequence image when the display of said first video image sequence is completed to control the display of said second video sequence image based on said phase difference,
wherein the control device (6, 6A, 6B) is arranged to determine said phase difference as the difference in time between the display of said first video sequence image at a predetermined position, and the completed reception and decoding of said second video sequence image, and
wherein the control device (6, 6A, 6B) is arranged to control the display of said second video sequence image by: adjusting the clock frequency of the display (7); and/or the length of the vertical blanking interval of said second video sequence image; and/or the length of the horizontal blanking interval of said second video sequence image.

2. A control device (6, 6A, 6B) according to claim 1, wherein the control device (6, 6A, 6B) is arranged to control the display of said second video sequence image based on said phase difference, wherein the video sequence image frame rate of the display (7) is an exact multiple of the number of video sequence images per second in the video sequence.

3. A control device (6, 6A, 6B) according to any of the preceding claims, wherein the control device (6, 6A, 6B) is arranged to control the clock frequency, the vertical synchronisation information (22) and/or the horizontal synchronisation information (23) based on the sensitivity of the display (7) to variations in clock frequency, vertical synchronisation information (22) and horizontal synchronisation information (23).

4. A control device (6, 6A, 6B) according to any of the claims 1-3, wherein the control device (6, 6A, 6B) is arranged to control variations in the delay differences between consecutive video sequence images of up to 1 ms.

5. Method for adjusting the video sequence image frame rate of a display (7), wherein said video sequence images are transmitted over a transmission channel (4) in a real-time video system (1), comprising the steps of:
displaying a first video sequence image; and
receiving a second video sequence image;
**characterized in**
comprising the steps of:
determining a phase difference between the display of the first video sequence image and the reception of the second video sequence image; and
adjusting the video sequence image frame rate of the display (7) by displaying said second video sequence image when the display of said first video image sequence is completed to control the display of said second video sequence image based on said phase difference,
wherein the step of determining the phase difference, further comprises the step of: determining the phase difference as the difference in time between the display of said first video sequence image at a predetermined position, and the completed reception and decoding of said second video sequence image, and
wherein the step of controlling the display of said second video sequence image is performed by adjusting the clock frequency of the display (7), the length of the vertical blanking interval of said second video sequence image, and/or the length of the horizontal blanking interval of said second video sequence image.

6. A method according to claim 5, further comprising the step of:
controlling the display of said second video sequence image based on said phase difference, wherein the video sequence image frame rate of the display (7) is an exact multiple of the number of video sequence images per second in the video sequence.

7. A method according to 5 or 6, wherein the step of controlling the display of said second video sequence image is performed based on the sensitivity of the display (7) to variations in clock frequency, vertical synchronisation information (22) and horizontal synchronisation information (23).

8. A method according to any of the claims 5-7, further comprising the step of: controlling variations in the phase differences between consecutive video sequence images of up to 1 ms.

9. Computer program product in a control device (6, 6A, 6B) according to any one of the claims 1-4, wherein said control device (6, 6A, 6B) comprises computer readable code means, which when run in said control device (6, 6A, 6B) performs the steps according to any one of the claims 5-8.

10. A computer program product according claim 9, wherein said code means is stored on a readable storage medium.

11. Real-time video system (1), which transmits video sequence images over a transmission channel (4), comprising a control device (6, 6A, 6B) according to any one of the claims 1-4.

12. A real-time video system (1) according to claim 11, wherein said real-time video system (1) is comprised in a ground vehicle, submerged vehicle, naval vehicles and/or space vehicle.

13. A real-time video system (1) according to claim 12, wherein said real-time video system (1) is comprised in military tank.

14. Display (7) for use in a real-time video system (1), wherein said real-time video system (1) transmits video sequence images over a transmission channel (4), wherein the display comprises a control device (6, 6A, 6B) according to any one of the claims 1-4.

## Patentansprüche

1. Steuervorrichtung (6, 6A, 6B) zur Einstellung der Videosequenzbildframerate einer Anzeige (7), wobei die Videosequenzbilder über einen Übertragungskanal (4) in einem Echtzeitvideosystem (1) übertragen werden, wobei die Steuervorrichtung (6, 6A, 6B) zum Folgenden ausgelegt ist
Anzeige eines ersten Videosequenzbildes auf einer Anzeige (7);
Empfangen eines zweiten Videosequenzbildes;
**dadurch gekennzeichnet, dass**
die Steuervorrichtung (6, 6A, 6B) ferner zum Folgenden ausgelegt ist Bestimmen einer Phasendifferenz zwischen der Anzeige des ersten Videosequenzbildes und dem Empfangen des zweiten Videosequenzbildes; und
Einstellen der Videosequenzbildframerate der Anzeige (7) durch Anzeige des zweiten Videosequenzbildes, wenn die Anzeige der ersten Video-bildsequenz vollendet worden ist, um die Anzeige des zweiten Videosequenzbildes basierend auf der Phasendifferenz zu steuern,
wobei die Steuervorrichtung (6, 6A, 6B) ausgelegt ist, um die Phasendifferenz als die Zeitdifferenz zwischen der Anzeige des ersten Videosequenzbildes an einer vorgegebenen Position und dem vollendeten Empfangen und Decodieren des zweiten Videosequenzbildes zu bestimmen, und
wobei die Steuervorrichtung (6, 6A, 6B) ausgelegt ist, um die Anzeige des zweiten Videosequenzbildes zu steuern durch: Einstellen der Taktfrequenz der Anzeige (7); und/oder der Dauer der vertikalen Austastlücke des zweiten Videosequenzbildes; und/oder der Dauer der horizontalen Austastlücke des zweiten Videosequenzbildes.

2. Steuervorrichtung (6, 6A, 6B) nach Anspruch 1, wobei die Steuervorrichtung (6, 6A, 6B) ausgelegt ist, um die Anzeige des zweiten Videosequenzbildes basierend auf der Phasendifferenz zu steuern, wobei die Videosequenzbildframerate der Anzeige (7) ein exaktes Vielfaches der Anzahl von Videosequenzbildern je Sekunde in der Videosequenz ist.

3. Steuervorrichtung (6, 6A, 6B) nach einem der vorgehenden Ansprüche, wobei die Steuervorrichtung (6, 6A, 6B) ausgelegt ist, um die Taktfrequenz, die vertikalen Synchronisierungsinformationen (22) und/oder die horizontalen Synchronisierungsinformationen (23) basierend auf der Sensitivität der Anzeige (7) gegenüber Variationen in der Taktfrequenz, den vertikalen Synchronisierungsinformationen (22) und den horizontalen Synchronisierungsinformationen (23) zu steuern.

4. Steuervorrichtung (6, 6A, 6B) nach einem der Ansprüche 1-3, wobei die Steuervorrichtung (6, 6A, 6B) ausgelegt ist, um Variationen in den Verzögerungsdifferenzen zwischen aufeinander folgenden Videosequenzbildern von bis zu 1 ms zu steuern.

5. Verfahren zur Einstellung der Videosequenzbildframerate einer Anzeige (7), wobei die Videosequenzbilder über einen Übertragungskanal (4) in einem Echtzeitvideosystem (1) übertragen werden, umfassend die folgenden Schritte:
Anzeige eines ersten Videosequenzbildes; und
Empfangen eines zweiten Videosequenzbildes;
**dadurch gekennzeichnet,**
**dass** es die folgenden Schritte umfasst:
Bestimmen einer Phasendifferenz zwischen der Anzeige des ersten Videosequenzbildes und dem Empfangen des zweiten Videosequenzbildes; und
Einstellen der Videosequenzbildframerate der Anzeige (7) durch Anzeige des zweiten Videosequenzbildes, wenn die Anzeige der ersten Video-bildsequenz vollendet worden ist, um die Anzeige des zweiten Videosequenzbildes basierend auf der Phasendifferenz zu steuern,
wobei der Schritt des Bestimmens der Phasendifferenz ferner den folgenden Schritt umfasst:
Bestimmen der Phasendifferenz als die Zeitdifferenz zwischen der Anzeige des ersten Videosequenzbildes an einer vorgegebenen Position und dem vollendeten Empfangen und Decodieren des zweiten Videosequenzbildes, und
wobei der Schritt des Steuerns der Anzeige des zweiten Videosequenzbildes durch Einstellen der Taktfrequenz der Anzeige (7), der Dauer der vertikalen Austastlücke des zweiten Videosequenzbildes und/oder der Dauer der horizontalen Austastlücke des zweiten Videosequenzbildes durchgeführt wird.

6. Verfahren nach Anspruch 5, das ferner den folgenden Schritt umfasst:
Steuern der Anzeige des zweiten Videosequenzbildes basierend auf der Phasendifferenz, wobei die Videosequenzbildframerate der Anzeige (7) ein exaktes Vielfaches der Anzahl von Videosequenzbildern je Sekunde in der Videosequenz ist.

7. Verfahren nach Anspruch 5 oder 6, wobei der Schritt des Steuerns der Anzeige des zweiten Videosequenzbildes basierend auf der Sensitivität der Anzeige (7) gegenüber Variationen in der Taktfrequenz, den vertikalen Synchronisierungsinformationen (22) und den horizontalen Synchronisierungsinformationen (23) durchgeführt wird.

8. Verfahren nach einem der Ansprüche 5 bis 7, ferner umfassend den folgenden Schritt:
Steuern von Variationen in den Phasendifferenzen zwischen aufeinander folgenden Videosequenzbildern von bis zu 1 ms.

9. Computerprogrammprodukt in einer Steuervorrichtung (6, 6A, 6B) nach einem der Ansprüche 1-4, wobei die Steuervorrichtung (6, 6A, 6B) ein computerlesbares Codierungsmittel umfasst, das, wenn es in der Steuervorrichtung (6, 6A, 6B) läuft, die Schritte nach einem der Ansprüche 5 bis 8 durchführt.

10. Computerprogrammprodukt nach Anspruch 9, wobei das Codierungsmittel in einem lesbaren Speichermedium gespeichert ist.

11. Echtzeitvideosystem (1), das Videosequenzbilder über einen Übertragungskanal (4) überträgt, umfassend eine Steuervorrichtung (6, 6A, 6B) nach einem der Ansprüche 1 bis 4.

12. Echtzeitvideosystem (1) nach Anspruch 11, wobei das Echtzeitvideosystem (1) in einem Bodenfahrzeug, einem Unterwasserfahrzeug, Marinefahrzeugen und/oder einem Raumfahrzeug eingeschlossen ist.

13. Echtzeitvideosystem (1) nach Anspruch 12, wobei das Echtzeitvideosystem (1) in einem Panzerfahrzeug enthalten ist.

14. Anzeige (7) zur Verwendung in einem Echtzeitvideosystem (1), wobei das Echtzeitvideosystem (1) Videosequenzbilder über einen Übertragungskanal (4) überträgt, wobei die Anzeige eine Steuervorrichtung (6, 6A, 6B) nach einem der Ansprüche 1 bis 4 umfasst.

## Revendications

1. Dispositif de commande (6, 6A, 6B) pour régler la fréquence de trames d'image de séquence vidéo d'un affichage (7), dans lequel lesdites images de séquence vidéo sont transmises sur un canal de transmission (4) dans un système vidéo en temps réel (1), ledit dispositif de commande (6, 6A, 6B) étant agencé pour
afficher une première image de séquence vidéo sur un affichage (7) ;
recevoir une deuxième image de séquence vidéo ;
**caractérisé en ce que**
ledit dispositif de commande (6, 6A, 6B) est en outre agencé pour déterminer une différence de phase entre l'affichage de la première image de séquence vidéo et la réception de la deuxième image de séquence vidéo ; et
régler la fréquence de trames d'image de séquence vidéo de l'affichage (7) en affichant ladite deuxième image de séquence vidéo lorsque l'affichage de ladite première image de séquence vidéo est terminé pour commander l'affichage de ladite deuxième image de séquence vidéo sur la base de ladite différence de phase,
dans lequel le dispositif de commande (6, 6A, 6B) est agencé pour déterminer ladite différence de phase comme la différence de temps entre l'affichage dudit premier image de séquence vidéo à une position prédéterminée, et la réception et le décodage terminés de ladite deuxième image de séquence vidéo, et
dans lequel le dispositif de commande (6, 6A, 6B) est agencé pour commander l'affichage de ladite deuxième image de séquence vidéo en : réglant la fréquence d'horloge de l'affichage (7) ; et / ou la longueur de l'intervalle de suppression verticale de ladite deuxième image de séquence vidéo; et / ou la longueur de l'intervalle de suppression horizontale dans ladite deuxième image de séquence vidéo.

2. Dispositif de commande (6, 6A, 6B) selon la revendication 1, dans lequel le dispositif de commande (6, 6A, 6B) est agencé pour commander l'affichage de ladite deuxième image de séquence vidéo sur la base de ladite différence de phase, dans lequel la fréquence de trames d'image de séquence vidéo de l'affichage (7) est un multiple exact du nombre d'images de séquence vidéo par seconde dans la séquence vidéo.

3. Dispositif de commande (6, 6A, 6B) selon l'une quelconque des revendications précédentes, dans lequel le dispositif de commande (6, 6A, 6B) est agencé pour commander la fréquence d'horloge, les informations de synchronisation verticale (22) et / ou les informations de synchronisation horizontale (23) sur la base de la sensibilité de l'affichage (7) à des variations de fréquence d'horloge, des informations de synchronisation verticale (22) et des informations de synchronisation horizontale (23).

4. Dispositif de commande (6, 6A, 6B) selon l'une quelconque des revendications 1 à 3, dans lequel le dispositif de commande (6, 6A, 6B) est agencé pour commander les variations des différences de retard entre des images de séquence vidéo consécutives jusqu'à 1 ms.

5. Procédé pour régler la fréquence de trames d'image de séquences vidéo d'un affichage (7), dans lequel lesdites images de séquence vidéo sont transmises sur un canal de transmission (4) dans un système vidéo en temps réel (1), comprenant les étapes consistant à :
afficher une première image de séquence vidéo ; et
recevoir une deuxième image de séquence vidéo ;
**caractérisé en**
comprenant les étapes de :
la détermination d'une différence de phase entre l'affichage de la première image de séquence vidéo et la réception de la deuxième image de séquence vidéo ; et
le réglage de la fréquence de trames d'image de séquences vidéo de l'affichage (7) en affichant ladite deuxième image de séquence vidéo lorsque l'affichage de ladite première séquence d'images vidéo est terminé pour commander l'affichage de ladite deuxième image de séquence vidéo sur la base de ladite différence de phase, dans lequel l'étape de détermination de la différence de phase, comprend en outre l'étape de :
la détermination de la différence de phase en tant que différence de temps entre l'affichage de ladite première image de séquence vidéo à une position prédéterminée, et la réception et le décodage terminés de ladite deuxième image de séquence vidéo, et
dans lequel l'étape de commande de l'affichage de ladite deuxième image de séquence vidéo est effectuée en réglant la fréquence d'horloge de l'affichage (7), la longueur de l'intervalle de suppression verticale de ladite deuxième image de séquence vidéo; et / ou la longueur de l'intervalle de suppression horizontale dans ladite deuxième image de séquence vidéo.

6. Procédé selon la revendication 5, comprenant en outre l'étape de :
la commande de l'affichage de ladite deuxième image de séquence vidéo sur la base de ladite différence de phase, dans lequel la fréquence de trames d'image de séquence vidéo de l'affichage (7) est un multiple exact du nombre d'images de séquence vidéo par seconde dans la séquence vidéo.

7. Procédé selon la revendication 5 ou 6, dans lequel l'étape de commande de l'affichage de ladite deuxième image de séquence vidéo est effectuée sur la base de la sensibilité de l'affichage (7) aux variations de fréquence d'horloge, des informations de synchronisation verticale (22) et des informations de synchronisation horizontale (23).

8. Procédé selon l'une quelconque des revendications 5 à 7, comprenant en outre l'étape de :
la commande de variations des différences de phase entre des images de séquence vidéo consécutives jusqu'à 1 ms.

9. Produit de programme informatique dans un dispositif de commande (6, 6A, 6B) selon l'une quelconque des revendications 1 à 4, dans lequel ledit dispositif de commande (6, 6A, 6B) comprend un moyen de code lisible par ordinateur qui, lorsqu'il est exécuté dans ledit dispositif de commande (6, 6A, 6B) exécute les étapes selon l'une quelconque des revendications 5 à 8.

10. Produit de programme informatique selon la revendication 9, dans lequel ledit moyen de code est mémorisé sur un support de stockage lisible.

11. Système vidéo en temps réel (1), qui transmet des images de séquence vidéo sur un canal de transmission (4), comprenant un dispositif de commande (6, 6A, 6B) selon l'une quelconque des revendications 1 à 4.

12. Système vidéo en temps réel (1) selon la revendication 11, dans lequel ledit système vidéo en temps réel (1) est compris dans un véhicule terrestre, un véhicule immergé, des véhicules navals et / ou un véhicule spatial.

13. Système vidéo en temps réel (1) selon la revendication 12, dans lequel ledit système vidéo en temps réel (1) est compris dans un tank militaire.

14. Affichage (7) destiné à être utilisé dans un système vidéo en temps réel (1), dans lequel ledit système vidéo en temps réel (1) transmet des images de séquence vidéo sur un canal de transmission (4), comprenant un dispositif de commande (6, 6A, 6B) selon l'une quelconque des revendications 1 à 4.
